(19) Europäisches Patentamt
European Patent Office
Office européen des brevets

(11) **EP 1 931 072 A2**

(12) **EUROPEAN PATENT APPLICATION**

(43) Date of publication:
**11.06.2008 Bulletin 2008/24**

(51) Int Cl.:
***H04L 1/00*** $^{(2006.01)}$

(21) Application number: **07122561.9**

(22) Date of filing: **06.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **08.12.2006 JP 2006332430**

(71) Applicant: **Fujitsu Ltd.**
**Kawasaki-shi, Kanagawa 211-8588 (JP)**

(72) Inventor: **Fujita, Takashi**
**Kawasaki-shi, Kanagawa 211-8588 (JP)**

(74) Representative: **Wilding, Frances Ward et al**
**Haseltine Lake**
**Lincoln House**
**300 High Holborn**
**London WC1V 7JH (GB)**

(54) **Transmission apparatus, reception apparatus and data transmission method**

(57)     A transmission apparatus is disclosed that includes an error detection code length calculating part for determining an error detection code length to be added to transmission data based on communication quality data of a reception apparatus, a calculating part for obtaining an error detection code having the error detection code length calculated by the error detection code length calculating part by conducting calculations based on the transmission data, and a transmitting part for adding the error detection code to the transmission data and transmitting the transmission data with the added error detection code.

FIG.3

**Description**

## BACKGROUND OF THE INVENTION

1. Field of the Invention

The present invention generally relates to a digital wireless communication system, and more particularly to a transmission apparatus, a reception apparatus, and a data transmission method.

2. Description of the Related Art

The wireless interface according to W-CDMA (Wideband-Code Division Multiple Access) used for third generation mobile communication systems comprises protocol layers of Layer 1, (physical layer), Layer 2 (data-link layer), and Layer 3 (network layer).

In Layer 1, a CRC (Cyclic Redundancy Check) code is added to each basic unit for processing data, that is, each transport block (TB) or each protocol data unit (PDU), in order to detect block error. Then, for example, channel encoding for error correction and interleaving are conducted. In this case, the CRC codes and the error correction codes, which have a predetermined fixed bit length, are re-transmitted in a case where an error occurs.

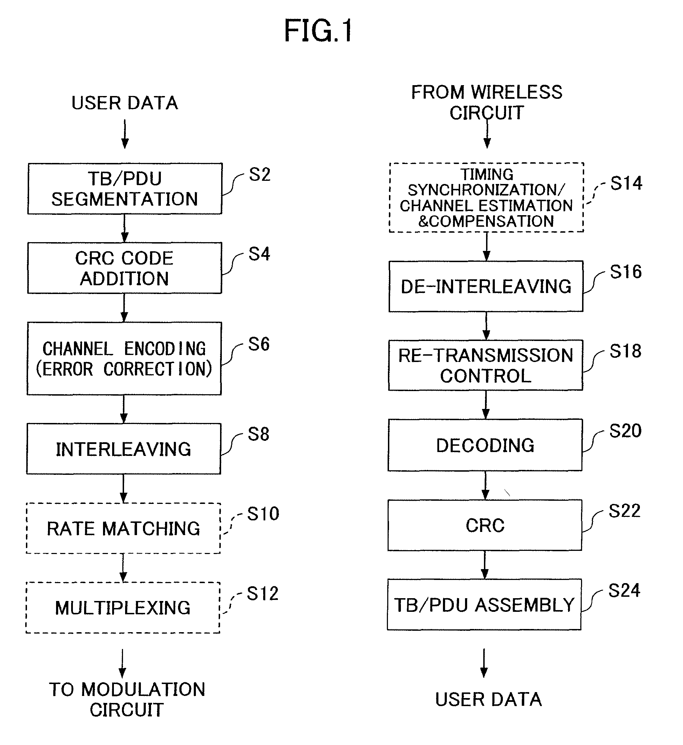

An operation of transmitting and receiving data are described with reference to Fig.1.

First, the processes conducted from a data (signal) transmission side are described (left side of Fig.1).

User data are segmented into transport blocks or protocol data units (Step S2). The transport block is a unit of data that is processed by Layer 1. The protocol data unit is a unit of data which is handled by a protocol.

Then, a CRC code is added to each transport block or each protocol data unit (Step S4). The added CRC code has a predetermined fixed bit length.

Then, channel encoding (Step S6) and interleaving (Step S8) are conducted. For example, in the channel encoding process, a convolutional encoding method and a turbo encoding method are selectively used, an interleaving process is conducted according to necessity, and switching (altering) of encoded bit sequences is conducted.

Then, rate matching is conducted (Step S10). In the rate matching process, with respect to the channel encoded bit sequence, a process of repeating or thinning is performed on a portion of bits of the bit sequence in accordance with the number of transport channels to be multiplexed or the transmission rate or QoS of each transport channel.

Then, multiplexing is conducted (Step S12). In the multiplexing process, plural transport channels are multiplexed and input to a modulation circuit.

Next, the processes conducted from a data (signal) reception side are described (right side of Fig.1).

The signals (data) transmitted from the transmission side are input to the modulation circuit and subjected to a reception process. For example, a demodulation process is performed on the received signals.

Then, a timing synchronization process /channel estimation & compensation process are performed (Step S14). For example, synchronous detection or channel estimation is conducted based on a pilot signal included in the received signals.

Then, a de-interleaving process is conducted (Step S16). In the de-interleaving process, the data sequence (bit sequence) whose order has been changed by the interleaver is decoded to its original order.

Then, a re-transmission control process is conducted (Step S18). In the re-transmission control process, a re-transmission process is conducted, according to necessity, based on error correction codes.

Then, a channel decoding process is conducted (Step S20).

Then, a CRC determining process is conducted (Step S22). In a case where there is an error, a re-transmission request is sent to the transmission side.

Then, assembly of the transport block or the protocol data unit is conducted (Step S24), to thereby restore (reconstruct) the data to its original state.

However, the above-described background art has the following problem.

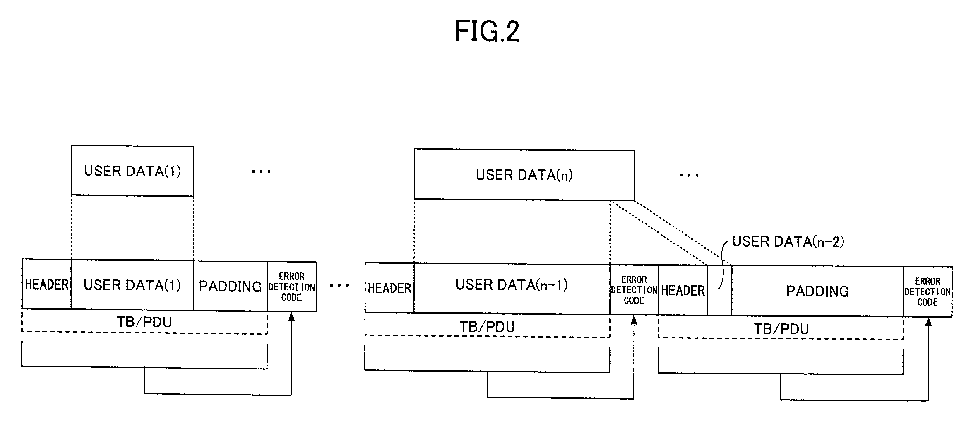

As shown in Fig.2, the bit length of the CRC code added to each transport block or each protocol data unit and the bit length of the error correction code added when conducting a channel encoding process are fixed. That is, the bit lengths of the CRC code and the error correction code are fixed regardless of the propagation (transmission) environment. Therefore, the bit lengths of the CRC code and the error correction code cannot be reduced even in an error free satisfactory propagation environment, that is, even where transmission error of data can be corrected by an error correction function. Therefore, the bit lengths of the CRC code and the error correction code cannot be reduced in an error free satisfactory propagation environment for assigning (distributing) user data (payload) with respect to the reduced bits.

Furthermore, in a case where the amount of user data to be transmitted with respect to transport block size (TBS) is small, the user data with respect to the transport block would be insufficient. In this case, padding (meaningless data) is added to the insufficient part of the user data.

In order to solve such a problem, there are proposed methods of obtaining (determining) the communication state from the error amount of the reception side and increasing/reducing the error correction encoded data according to the communication state, to thereby control an error correction function or obtain a valid (effective) data length (see, for example, Japanese Laid-Open Patent Application Nos. 2005-303495 and 2-087735). However, with these methods, the amount of encoded error correction data is controlled according to only the error amount of the reception side. Therefore, the methods of controlling the amount of encoded error correction data according to only the error amount of the reception side are insufficient in view of application to a fading environment of a wireless network in a mobile communication system.

However, there is no significant problem in controlling error correction encoding in the wireless network of the mobile communication system since an AMC (Adaptive Modulation and Coding) transmission method is mainly used for adaptively changing the modulation scheme or the error correction encoding rate at high speed in accordance with the radio-wave environment. In other words, even if the error correction encoding is not controlled, there is no significant communication problem since adaptive modulation/coding is conducted.

**SUMMARY OF THE INVENTION**

The present invention may provide a transmission apparatus, a reception apparatus, and a data transmission method that substantially obviate one or more of the problems caused by the limitations and disadvantages of the related art.

Features and advantages of the present invention will be set forth in the description which follows, and in part will become apparent from the description and the accompanying drawings, or may be learned by practice of the invention according to the teachings provided in the description. Objects as well as other features and advantages of the present invention will be realized and attained by a transmission apparatus, a reception apparatus, and a data transmission method particularly pointed out in the specification in such full, clear, concise, and exact terms as to enable a person having ordinary skill in the art to practice the invention.

To achieve these and other advantages and in accordance with the purpose of the invention, as embodied and broadly described herein, an embodiment of the invention provides a transmission apparatus including: an error detection code length calculating part for determining an error detection code length to be added to transmission data based on communication quality data of a reception apparatus; a calculating part for obtaining an error detection code having the error detection code length determined by the error detection code length calculating part by conducting calculation based on the transmission data; and a transmitting part for adding the error detection code to the transmission data and transmitting the transmission data with the added error detection code.

Furthermore, another embodiment of the present invention provides a reception apparatus including an error detection code determining part for performing error detection on transmission data transmitted from a transmission apparatus; wherein the transmission apparatus determines the length of an error detection code to be added to the transmission data based on communication quality data of the reception apparatus and reports the determined error detection code length to the reception apparatus.

Furthermore, another embodiment of the present invention provides a data transmission method for transmitting data from a transmission apparatus to a reception apparatus, the method including the steps of: receiving communication quality data of the reception apparatus; determining an error detection code length to be added to transmission data based on the communication quality data; obtaining an error detection code having the error detection code length by conducting calculation based on the transmission data; adding the error detection code to the transmission data; and transmitting the transmission data with the added error detection code.

Other objects and further features of the present invention will be apparent from the following detailed description when read in conjunction with the accompanying drawings.

**BRIEF DESCRIPTION OF THE DRAWINGS**

Fig.1 is a flowchart showing an operation of transmitting and receiving data;
Fig.2 is a schematic diagram showing a configuration of a transport block/protocol data unit;
Fig.3 is a partial block diagram showing a transmission apparatus and a reception apparatus according to an embodiment of the present invention;
Fig.4 shows an example of a parameter conversion table according to an embodiment of the present invention;
Fig.5 shows an example of an error detection code length table according to an embodiment of the present invention;
Fig.6 shows an example of a format of control data according to an embodiment of the present invention;
Fig.7 is a flowchart showing an operation by a transmission apparatus according to an embodiment of the present invention;

Fig.8 is a schematic diagram showing a configuration of a transport block/protocol data unit according to an embodiment of the present invention;

Fig.9 is a flowchart showing an operation by a reception apparatus according to an embodiment of the present invention;

Fig.10 shows an example of an error detection code length table according to an embodiment of the present invention;

Fig.11 is a schematic diagram showing a configuration of a transport block/protocol data unit according to an embodiment of the present invention;

Fig.12 shows an example of a format of control data according to an embodiment of the present invention;

Fig.13 is a flowchart showing an operation by a transmission apparatus according to an embodiment of the present invention;

Fig.14 is a flowchart showing an operation by a reception apparatus according to an embodiment of the present invention;

Fig.15 is a schematic diagram showing a configuration of a transport block/protocol data unit according to an embodiment of the present invention;

Fig.16 is a flowchart showing an operation by a transmission apparatus according to an embodiment of the present invention;

Fig.17 is a flowchart showing an operation by a transmission apparatus according to an embodiment of the present invention;

Fig.18 is a flowchart showing an operation by a reception apparatus according to an embodiment of the present invention; and

Fig.19 is a flowchart showing an operation by a reception apparatus according to an embodiment of the present invention.

## DESCRIPTION OF THE PREFERRED EMBODIMENTS

In the following, embodiments of the present invention are described with reference to the accompanying drawings.

In a mobile communication system, it is necessary to consider various parameters for optimally controlling the bit length of an error detection code according to the propagation environment. The parameters include, for example, the reception quality in a fading environment, the frequency characteristics, modulation scheme, coding rate, and communications quality (QoS) of packet data according to OFDM (Orthogonal Frequency Division Multiplexing, considered likely to be the main stream in the future).

Furthermore, parameters of the reception quality include, for example, BER (Bit Error Rate), BLER (BLock Error Rate), Doppler frequency (fd), and SIR (Signal to Interference Ratio). In the mobile communication system according to an embodiment of the present invention, these parameters are weighted, so that the bit length of the error detection code, that is, error detection code length can be adaptively variably controlled. By cooperatively conducting the error detection length control with re-transmission control, communication quality can be improved.

Furthermore, the mobile communication system according to an embodiment of the present invention not only can achieve variable control of the bit length of an error detection code but can also conduct thinning of an error detection code added to a transport block (described in detail below).

Furthermore, in a case where there is only a small amount of user data to be transmitted with respect to a transport block size, repetition of the error detection code may be conducted without having to produce padding. This increases error detection performance. In this case, "repetition" refers to a supplementing the data with error detection code in a case where there is a small amount of data to be transmitted with respect to the transport block size.

It is to be noted that the mobile communication system according to an embodiment of the present invention is applied not only to a case of adding error detection code to each transport block, but also to a case of adding CRC code to each protocol data unit.

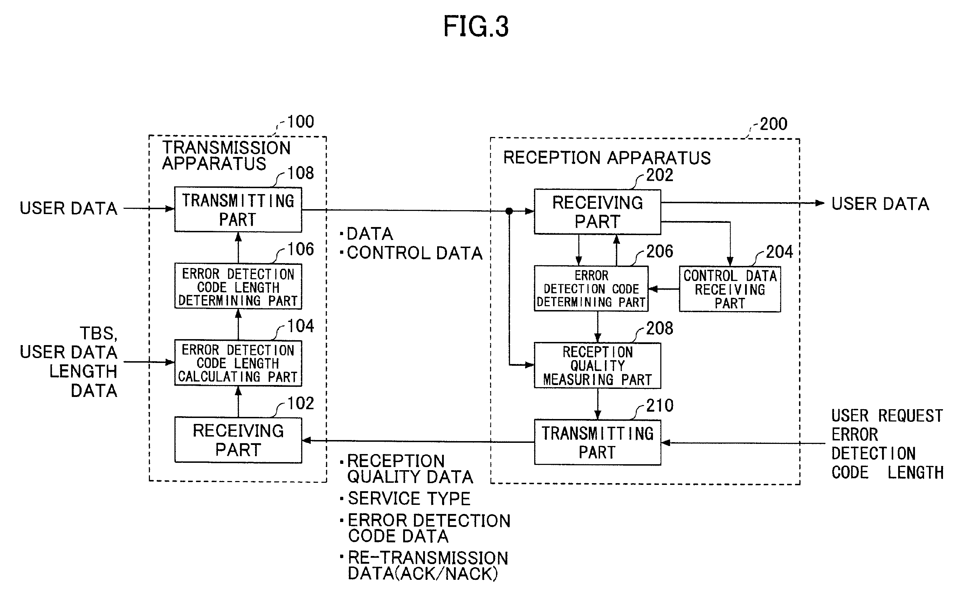

Next, a wireless communication system according to a first embodiment of the present invention is described with reference to Fig.3.

The wireless communication system according to the first embodiment of the present invention includes a transmission apparatus 100 and a reception apparatus 200. In the below-described first embodiment of the present invention, the transmission apparatus 100 is mounted on a base station apparatus, and the reception apparatus 200 is mounted on a mobile station apparatus. It is, however, to be noted that the transmission apparatus 100 may be mounted on a mobile station apparatus, and the reception apparatus 200 may be mounted on a base station apparatus.

The transmission apparatus 100 according to the first embodiment of the present invention includes a receiving part 102, an error detection code length calculating part 104 serving as a modulation scheme/encoding rate determining part and an error detection code length calculating part, an error detection code length determining part 106, and a transmitting part 108 serving as a calculating part and a transmitting part.

The receiving part 102 receives data (e.g., reception quality data, service type data, error detection code data, and re-transmission data (ACK/NACK)) transmitted from the reception apparatus 200 (i.e. reception side) and inputs the received data to the error detection code length calculating part 104. In this example, the error detection code data include data indicating the bit length of an error detection code determined beforehand by each system, in other words, data indicating the bit length of the error detection code before being variably controlled.

The reception quality data received by the receiving part 102 include, for example, BER (Bit Error Rate) and/or BLER (BLock Error Rate), and SIR (Signal to Interference Ratio). Furthermore, the service type data received by the receiving part 102 include, for example, QoS (Quality of Service).

The error detection code length calculating part 104 calculates system parameters (e.g., combination of modulation scheme and encoding rate) to be applied (for transmission to) to the reception apparatus 200 based on the input reception quality data (e.g., SIR). For example, a combination of data modulation scheme and a channel encoding rate is prepared beforehand. As the data rate increases, the data error rate increases. Therefore, the combination of the data modulation scheme and the channel encoding rate to be applied to the reception apparatus 200 is a combination causing the data rate to increase as the quality of the channel (channel quality) improves and causing data rate to decrease as the channel quality worsens. For example, a table including SIRs (serving as indices indicative of the channel quality) and corresponding combinations of data modulation scheme and the channel encoding rate is prepared beforehand. By referring to the table in correspondence with the input channel quality, a corresponding combination of the data modulation scheme and the channel encoding rate (hereinafter also referred to as "modulation scheme/encoding rate") is calculated.

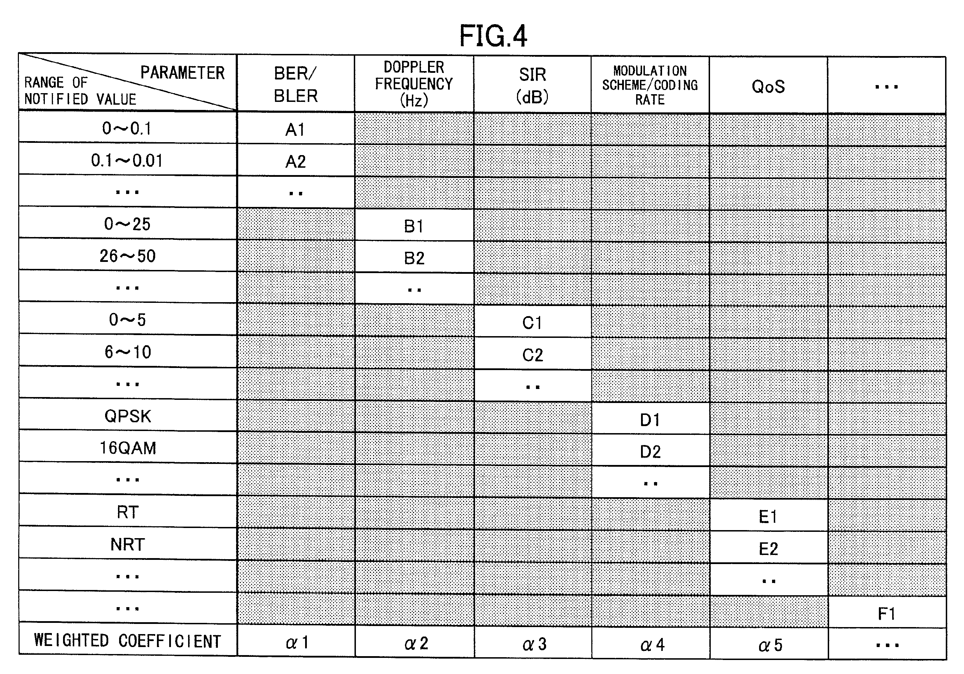

The error detection code length calculating part 104 converts the reception quality/service type data received from the receiving part 102 and the calculated combination of the data modulation scheme/channel encoding rate into bit values by referring to a parameter conversion table. For example, as shown in Fig.4, the parameter conversion table shows each parameter (e.g., reception quality data, system parameters, service type data) indicated together with a corresponding weight and a conversion value with respect to a given value. In Fig.4, in a case where the value of the bit error rate (BER)/block error rate (BLER) ranges from 0 through 0.1, the BER/BLER is converted into a conversion value of A1. In a case where the value of the BER/BLER ranges from 0.1 through 0.2, the BER/BLER is converted into a conversion value of A2. The conversion value and the weighted coefficient are changed in accordance with the environment in which the transmission apparatus 100 is located.

The conversion values of the BER/BLER and the Doppler frequency become higher as the reported (input) value becomes higher. The conversion value of SIR becomes smaller as the reported (input) value becomes higher. The conversion value of the modulation scheme/encoding rate become higher as the data rate becomes higher. The conversion value of the QoS with respect to NRT (Non Real Time) transmission is greater compared to that of RT (Real Time).

Furthermore, the error detection code length calculating part 104 calculates (determines) the error detection code length based on the conversion values and weight coefficients corresponding to each parameter. For example, in a case where the weight coefficients corresponding to the BER/BLER, the Doppler frequency, the SIR, the modulation scheme/encoding rate, and QoS are indicated as $\alpha1$, $\alpha2$, $\alpha3$, $\alpha4$, and $\alpha5$ (see Fig.4), the error detection code length calculating part 104 calculates (determines) the error detection code length by the following expression:

```
conversion value of BER/BLER × α1 + conversion
value of Doppler frequency × α2 + conversion value
of SIR × α3 + conversion value of modulation
scheme/encoding rate × α4 + conversion value of QoS
× α5.
```

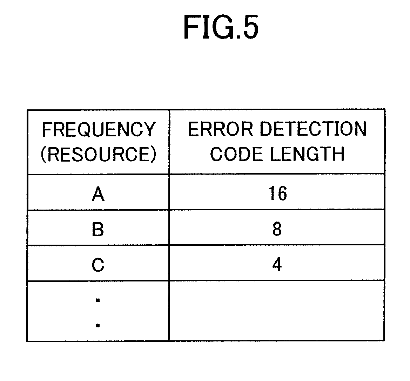

Furthermore, the error detection code length calculating part 104 writes the calculated error detection code length in correspondence with each frequency band (wireless resource) to be assigned (allocated) to the reception apparatus 200 to an error detection code length table. Accordingly, as shown in Fig.5, the calculated error detection code length is written in correspondence with each wireless resource to be assigned to the reception apparatus 200.

The error detection code length determining part 106 determines the bit length (number of bits in a bit string) of the error detection code to be added to the transport block for each frequency band (wireless resource) by referring to the error detection code length table.

The transmitting part 108 segments and cuts out user data to match a predetermined size of the transport block, and generates (forms) a header. The header includes, for example, data indicating a sequence number or a data length. The transmitting part 108 calculates (obtains) the error detection code based on the header and the segmented user data. Then, the transmitting part 108 adds the calculated (obtained) error detection code to the transport block and transmits the transport block to the reception apparatus 200. In a case where a CRC (Cyclic Redundancy Check) code is used as the error detection code, the error detection code is the remainder of the expression

$$\text{"}P(x) \ \times \ x^n / G(x)\text{"}$$

wherein "P(x)" indicates the transmitted bit sequence (i.e. bit sequence including the header and segmented user data), "G(x)" indicates a generating polynomial, and "n" indicates the highest order of the generating polynomial.

For example, in calculating the error detection code, generated polynomials of different highest orders may be used in correspondence with the bit length of the error detection code. Furthermore, a predetermined process may be performed on the calculated error detection code for matching an error detection code of a predetermined bit length. For example, the error detection code may be determined according to the bit length of the error detection code by having the bit location of the error detection code decided beforehand by the transmission apparatus 100 and the reception apparatus 200.

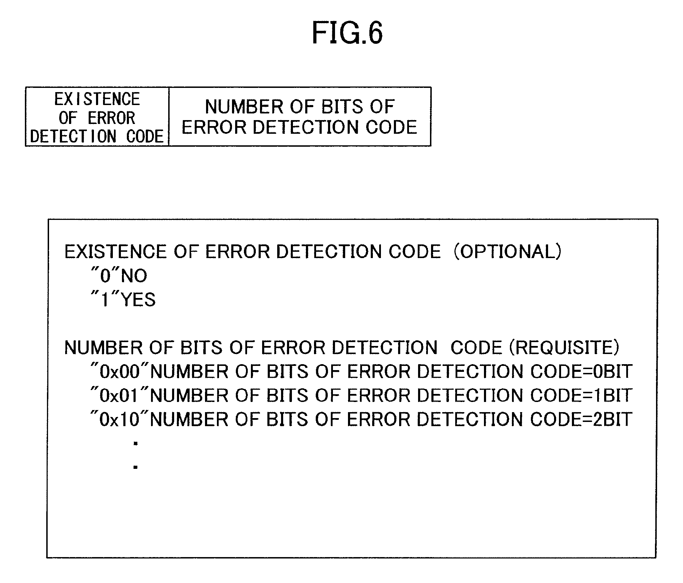

The transmitting part 108 transmits the error detection code data to the reception apparatus 200 as control data. As shown in Fig.6, one example of the format of the control data has a field including data indicating the existence of an error detection code, and a field including data indicating the error detection code length. As shown in Fig.6, the field including data indicating the existence of an error detection code is optional. That is, the field including data indicating the existence of an error detection code is prepared if necessary. In a case where there is no error detection code (i.e. no addition of error detection code), "0" is added to the field including data indicating the existence of an error detection code. In a case where there is an error detection code (i.e. addition of an error detection code), "1" is added to the field including data indicating the existence of an error detection code. Furthermore, in a case where the error detection code length is 0 bits (i.e. no error detection code added), "0 $\times$ 00" is added to the field including data indicating the number of bits (bit length) of the error detection code. In a case where the error detection code length is 1 bit, "0 $\times$ 01" is added to the field including data indicating the number of bits (bit length) of the error detection code. In a case where the error detection code length is 2 bits, "0 $\times$ 10" is added to the field including data indicating the number of bits (bit length) of the error detection code. In this example, "0 $\times$ " is for indicating a hexadecimal numeral.

In a case where the size of the transport block to be communicated (i.e. transmitted/received) is determined beforehand, there is no need to report the determined error detection code length (e.g., CRC bit length) and thinning rate to the receiver side since the CRC bit number and the existence of CRC bits can be determined from the length of the data added to the protocol data unit header.

Although the above embodiment of the present invention describes a case where the transmission side determines the error detection code length and reports the determined error detection code length to the reception side, the reception side may alternatively determine the error detection code length and report the determined error detection code length to the transmission side.

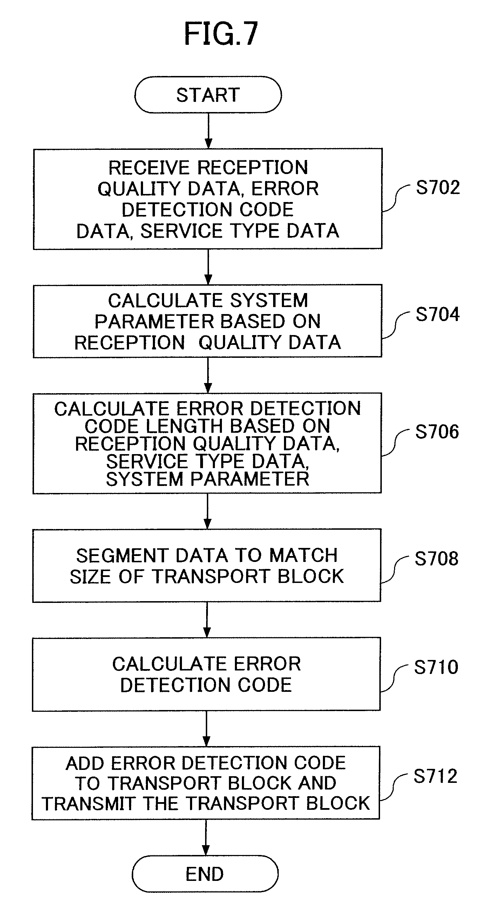

Next, an operation of the transmission apparatus 100 according to the first embodiment of the present invention is described with reference to Fig.7.

The receiving part 108 receives reception quality data, error detection code data, and service type data transmitted from the reception apparatus 200 (Step S702).

Then, the error detection code length calculating part 104 calculates system parameters (e.g., modulation scheme/encoding rate) to be applied to the reception apparatus 200 based on the reception quality data (Step S704).

Then, the error detection code length calculating part 104 calculates the error detection code length based on the reception quality data, the service type data, and the system parameters (Step S706).

Then, the transmitting part 108 segments the data to match the size of the transport block (Step S708).

Then, the transmitting part 108 calculates the error detection code based on the header and the segmented user data (Step S710). For example, in calculating the error detection code, generated polynomials of different highest orders may be used in correspondence with the bit number of the error detection code. Furthermore, a predetermined process may be performed on the calculated error detection code for matching an error detection code of a predetermined bit number. For example, the error detection code may be determined according to the bit number of the error detection code by having the bit location of the error detection code decided beforehand by the transmission apparatus 100 and the reception apparatus 200.

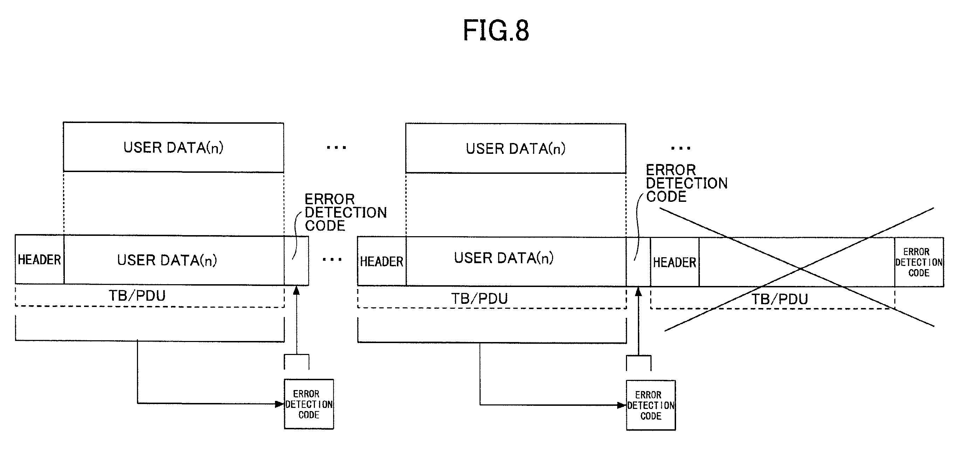

Then, as shown in Fig.8, the transmitting part 108 adds the error detection code to the transport block (TB) and transmits the transport block with the added error detection code (Step S712).

Although the operation of Fig.7 describes a case where the user data are segmented to match the size of the transport block after the error detection code length is calculated, the error detection code length may be calculated after the user data are segmented to match the size of the transport block.

Next, an operation of the reception apparatus 200 according to the first embodiment of the present invention is described.

As shown in Fig.3, the reception apparatus 200 according to the first embodiment of the present invention includes a receiving part 202, a control data receiving part 204, an error detection code determining part 206, a reception quality measuring part 208, and a transmitting part 210.

The receiving part 202 receives control data and data transmitted from the transmission apparatus 100. The control data includes, for example, data indicating error detection code length.

The receiving part 202 stores the received data and control data in a re-transmission buffer for conducting re-transmission control. The received control data are input to the control data receiving part 204, and the received data are input to the error detection code determining part 206.

The control data receiving part 204 decodes the control data transmitted (reported) from the transmission apparatus 100 and inputs error code length data included in the control data to the error detection code determining part 206.

The error detection code determining part 206 determines the error detection code. For example, the error detection code determining part 206 recognizes the error detection code length (i.e. number of bits of the error detection code) based on the error detection code length data input from the control data receiving part 204, performs error detection on the received data, and inputs the detection results to the reception quality measuring part 208. In another example, the error detection code determining part 206 performs error detection by comparing the error detection code calculated according to the received data and the error detection code added at the transmission side (i.e. transmission apparatus 100) at an effective bit length.

The reception quality measuring part 208 measures, for example, BER and/or BLER based on the error detection results input from the error detection code determining part 206. Furthermore, the reception quality measuring part 208 measures reception quality with such as Doppler frequency (fd), and SIR (Signal to Interference Ratio) based on the transmitted data from the transmission apparatus 100.

The transmitting part 210 transmits, for example, the reception quality data measured by the reception quality measuring part 208, the service type data and the error detection code length data requested by the user to the transmission apparatus 100. For example, at the first time of transmission, the transmitting part 210 transmits data indicating the error detection code length before being subject to variable control. Furthermore, in a case where no error is found in the received data, the transmitting part 210 transmits ACK to the transmission apparatus 100. In a case where an error is found in the received data, the transmitting part 210 transmits NACK to the transmission apparatus 100.

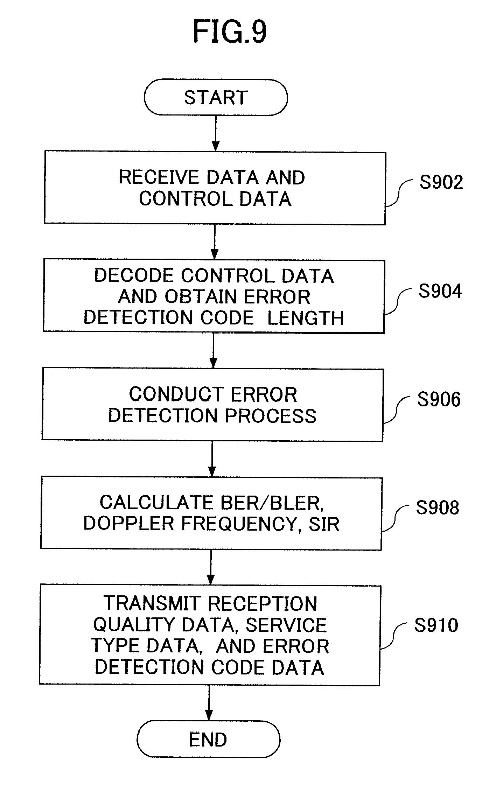

Next, an operation of the reception apparatus 200 according to the first embodiment of the present invention is described with reference to Fig.9.

The receiving part 202 receives data and control data from the transmission apparatus 100 (Step S902).

Then, the control data receiving part 204 decodes the control data and obtains error detection code length (Step S904).

Then, the error detection code determining part 206 conducts an error detection process based on the error detection code length (Step S906).

Then, the reception quality measuring part 208 measures (calculates) BER and/or BLER, Doppler frequency, and SIR (Step S908).

Then, the transmitting part 210 transmits reception quality data, service type data, and error detection code data (Step S910).

Next, a wireless communication system according to a second embodiment of the present invention is described. It is to be noted that, in the second embodiment of the present invention, like components are denoted by like reference numerals of the first embodiment of the present invention and are not further explained.

In the wireless communication system according the second embodiment of the present invention, in addition to variably controlling the length of the error detection code, the error detection code added to the transport block is thinned. That is, the transport block to which the error detection code is added is variable. In other words, the interval of the transport block is changed (modified).

The configurations of the transmission apparatus and the reception apparatus are substantially the same as those of the above-described transmission apparatus 100 and the reception apparatus 200 described with reference to Fig.3.

The error detection code length calculating part 104, which serves as an interval addition determining part, writes the value of the calculated error detection code with respect to each frequency band (i.e. wireless resource) to be assigned to (to be used in transmission to) the reception apparatus 200 and calculates the interval for adding the error detection code to the transport block. For example, the interval for adding the error detection code to the transport block is calculated by dividing the calculated error detection code length by the bit length of the error detection code before being variably controlled, to thereby obtain the proportion (rate) of adding the error detection code in a case where the error detection code is added to every transport block. As the calculated error detection code becomes shorter, it is estimated that the propagation environment between the transmission apparatus 100 and the reception apparatus 200 improves. Therefore, it is regarded that no problem would occur even if the interval for adding the error detection code were made longer.

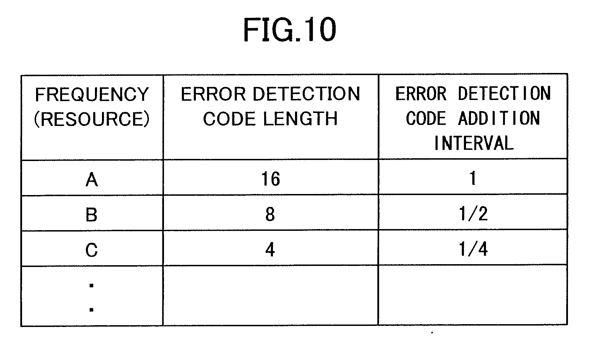

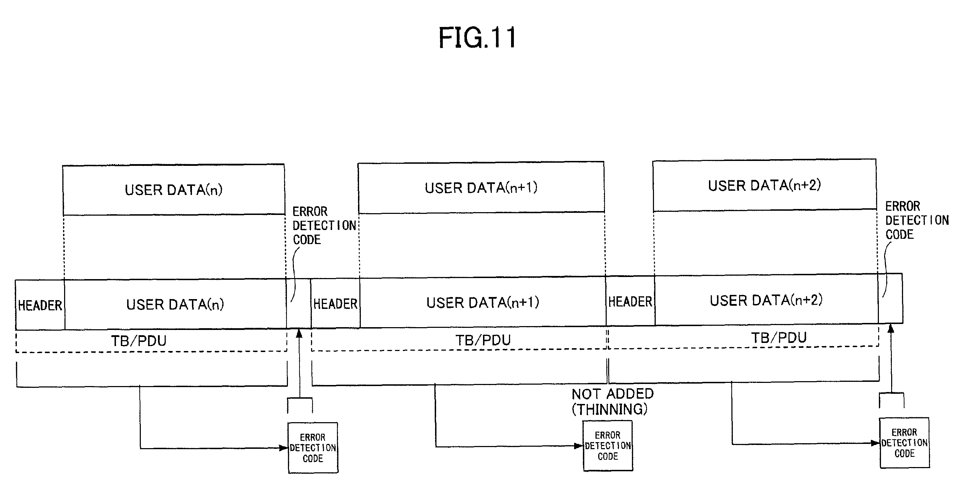

As a result, the error detection code length and the interval for adding the error detection code (error detection code addition interval) are written with respect to each wireless resource to be assigned to the reception apparatus 200 (for example, see the table shown in Fig.10). For example, in a case where the value of the error detection code addition interval is indicated as "1/n" ("n" being an integer satisfying n > 0), one error detection code is added to "n" transport blocks. Therefore, as shown in Fig.11, in a case of "n = 2", one error detection code is added to two transport blocks (in other words, an error detection code is added to every other transport block).

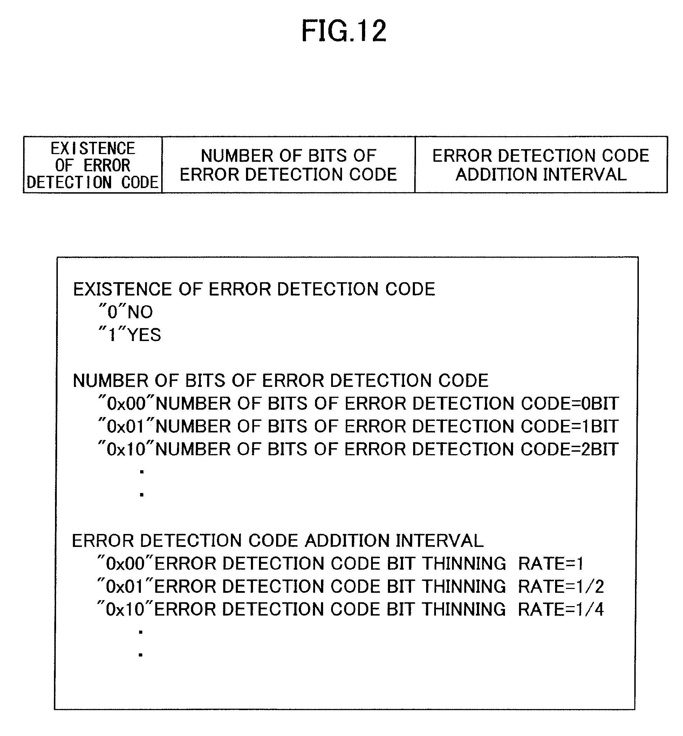

The transmitting part 108 according to the second embodiment of the present invention transmits data and control data to the reception apparatus 200. In addition to error detection code length data, the control data also include data indicating the interval for adding the error detection code (error detection code addition interval) as shown in Fig. 12. As shown in Fig.12, "0 × 00" indicating that the error detection code interval is "1" (thinning rate of error detection code = 1) is added to the field including the number of bits of the error detection code. In other words, "0 × 00" indicating that the error detection code is added to every transport block) is added to the field including the number of bits of the error detection code. Furthermore, "0 × 01" indicating that the error code interval is "1/2" (thinning rate of error detection code = 1/2) is added to the field including the number of bits of the error detection code. In other words, "0 × 01" indicating that the error detection code is added every other transport block is added to the field including the number of bits of the error detection code. Furthermore, "0 × 10" indicating that the error code interval is "1/4" (thinning rate of error detection code = 1/4) is added to the field including the number of bits of the error detection code. In other words, "0 × 10" indicating that the error detection code is added every four transport blocks is added to the field including the number of bits of the error detection code.

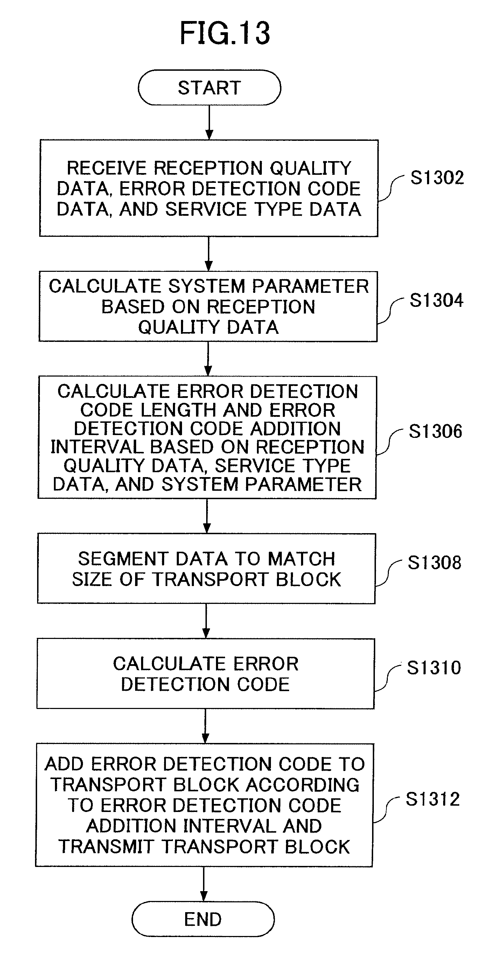

Next, an operation of the transmission apparatus 100 according to the second embodiment of the present invention is described with reference to Fig.13.

The receiving part 108 receives reception quality data, error detection code data, and service type data transmitted from the reception apparatus 200 (Step S1302).

Then, the error detection code length calculating part 104 calculates the system parameters (e.g., modulation scheme/encoding rate) to be applied to the reception apparatus 200 based on the reception quality data (Step S1304).

Then, the error code length calculating part 104 calculates the error detection code length and the interval of adding the error detection code (error detection code addition interval) based on the reception quality data, the service type data, and the system parameters (Step S1306).

Then, the transmitting part 108 segments the data to match the size of the transport block (Step S1308).

Then, the transmitting part 108 calculates the error detection code based on the header and the user data (Step S1310). For example, in calculating the error detection code, generated polynomials of different highest orders may be used in correspondence with the bit length of the error detection code. Furthermore, a predetermined process may be performed on the calculated error detection code for matching an error detection code of a predetermined bit length. For example, the error detection code may be determined according to the bit length of the error detection code by having the bit location of the error detection code decided beforehand by the transmission apparatus 100 and the reception apparatus 200.

Then, the transmitting part 108 adds the error detection code to the transport block according to the error detection code and transmits the transport block (Step S1312).

Although the operation shown in Fig.13 describes a case where the user data to be transmitted are segmented to match the size of the transport block after the error detection code length and the error detection code addition interval are calculated, the error detection code length and the error detection code addition interval may be calculated after the user data to be transmitted are segmented to match the size of the transport block.

Next, an operation of the reception apparatus 200 according to the second embodiment of the present invention is described.

The control data receiving part 204 decodes the control data transmitted (reported) from the transmission apparatus 100 and inputs the error detection code length and the error detection code addition interval included in the control data to the error detection code determining part 206.

The error detection code determining part 206 conducts an error detection code determining process (error detection code determination). For example, in the error detection code determination, the error detection code determining part 206 performs error detection on the received data based on the error detection code length and the error detection code addition interval input from the control data receiving part 204. The results of the error detection are input to the reception quality measuring part 208.

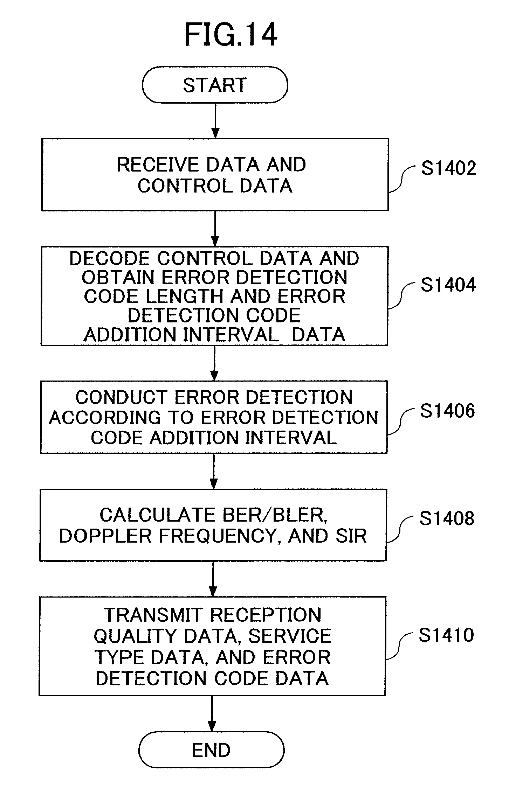

Next, an operation of the reception apparatus 200 according to the second embodiment of the present invention is described with reference to Fig.14.

The receiving part 202 receives data and control data from the transmission apparatus 100 (Step S1402).

Then, the control data receiving part 204 decodes the control data and obtains the error detection code length and the error detection code addition interval (Step S1404).

Then, the error detection code determining part 206 conducts an error detection process based on the error detection code length and the error detection code addition interval (Step S1406).

Then, the reception quality measuring part 208 measures (calculates) BER and/or BLER, Doppler frequency, and SIR (Step S1408).

Then, the transmitting part 210 transmits reception quality data, service type data, and error detection code data (Step S1410).

Next, a wireless communication system according to a third embodiment of the present invention is described. It is to be noted that, in the third embodiment of the present invention, like components are denoted by like reference numerals of the first and second embodiments of the present invention and are not further explained.

In the wireless communication system according the third embodiment of the present invention, in addition to variably controlling the length of the error detection code, repetition of the error detection code is conducted without conducting padding in a case where the amount of user data to be transmitted is insufficient with respect to the size of the transport block. By doing so, error detection performance can be improved. The repetition process according to this embodiment of the present invention is to use error detection code to fill empty parts (spaces) created due to an insufficient amount of data to be transmitted with respect to the size of the transport block (supplementing the data).

The configurations of the transmission apparatus and the reception apparatus are substantially the same as those of the above-described transmission apparatus 100 and the reception apparatus 200 described with reference to Fig.3.

In this embodiment of the present invention, data for the size of the transport block (transport block size) and user data length are input to the error detection code length calculating part 104.

The error detection code length calculating part 104 writes the value of the calculated error detection code length in an error code length table in correspondence with each frequency band (i.e. wireless resource) to be assigned to the reception apparatus 200.

Accordingly, the error detection code length is written in correspondence with each wireless resource to be assigned to the reception apparatus 200 as shown in Fig.5.

The error detection code length calculating part 104, which serves as a space size calculating part, determines whether the amount of user data to be transmitted is insufficient with respect to the size of the transport block based on the data indicating the size of the transport block and the user data length. For example, the error detection code calculating part 104 determines whether a space is created with respect to the size of the transport block in a case where a header and segmented data are added.

In a case where the error detection code length calculating part 104 determines that a space is created, the error detection code length calculating part 104 determines whether the number of bits of the space (bit space) is an integral multiple of the error detection code length. In a case where the bit space is an integral multiple of the error detection code length, the error detection code length calculating part determines to fill the bit space with the error detection code.

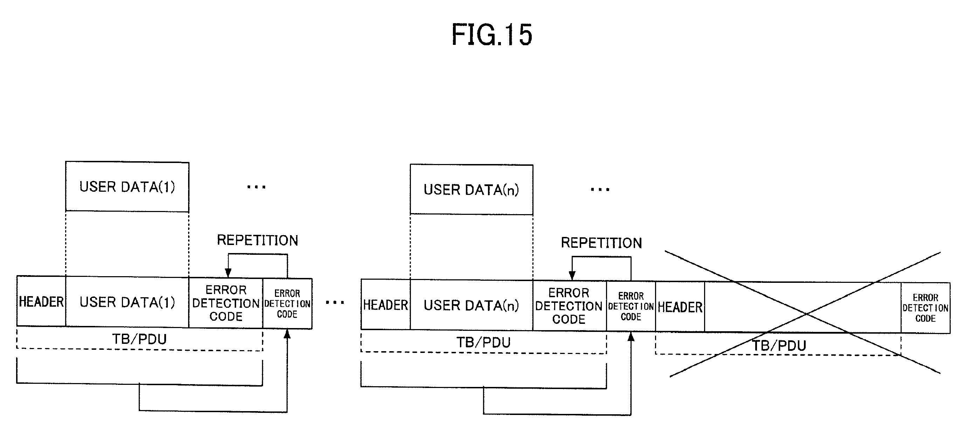

On the other hand, in a case where the error detection code length calculating part 104 determines that the number of bits of the space (bit space) is not an integral multiple of the error detection code length, the error detection code length calculating part 104 determines that a predetermined process is to be performed on the error detection code by processing the error detection code to match the number of bits of the space and fill the bit space with the processed error detection code, as shown in Fig.15. For example, the bit location of the calculated error detection code may be decided beforehand by the transmission apparatus 100 and the reception apparatus 200 according to the number of bits of the space. Fig.15 shows a case where there are not enough user data to reach the error detection code, such that a bit space is created.

The transmitting part 108 segments and user data to match a predetermined size of the transport block, and generates (forms) a header. The header includes, for example, data indicating a sequence number or a data length. The transmitting part 108 calculates the error detection code based on the header and the segmented user data. Then, the transmitting part 108 adds the calculated error detection code to the transport block. Furthermore, the transmitting part 108 adds the header and the segmented user data to the transport block size in accordance with the determination of the error detection code length calculating part. In a case where a space (bit space) is created, the bit space is filled with the error detection code, and the transport block having the bit space filled with the error detection code is transmitted to the reception apparatus 200. Accordingly, in a case where there is little user data to be transmitted with respect to the size of the transport block, repetition of error detection data is conducted without performing padding. This increases the number of bits of the error detection code, to thereby improve error detection performance.

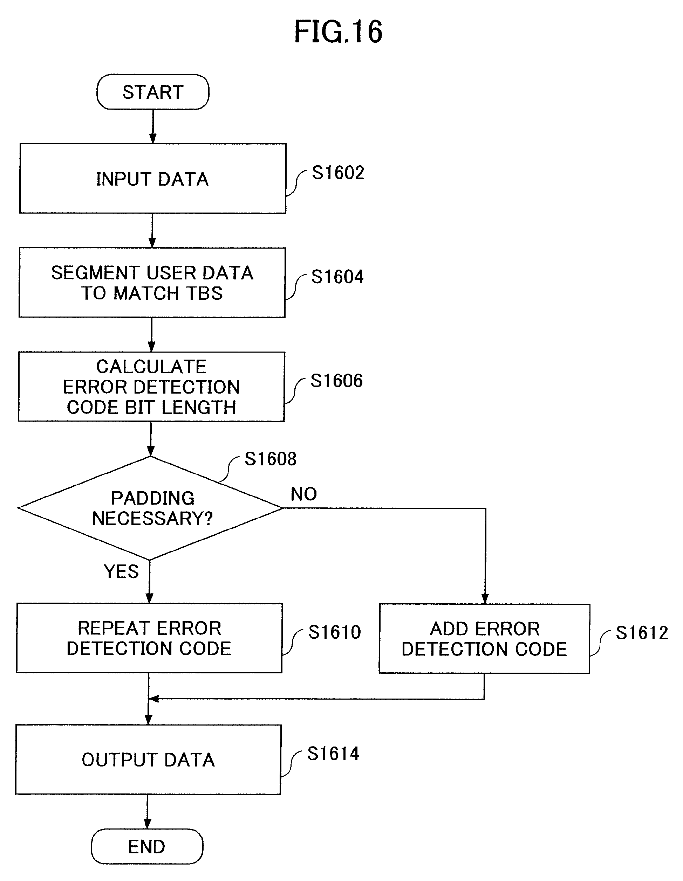

The transmission apparatus 100 according to the third embodiment of the present invention is described with reference to Fig.16.

The processes performed until the error detection code is calculated are substantially the same as those described in Steps S702 through S706 of Fig.7.

The user data to be transmitted are input to the transmission apparatus 100 (Step S1602).

The transmitting part 108 segments the user data to match the size of the transport block (Step S1604).

Then, the error detection code length determining part 104 calculates the error detection code bit length (Step S1606).

Then, the error detection code length determining part 104 determines whether the user data are sufficient with respect to the size of the transport block. That is, the error detection code length determining part 104 determines whether padding is necessary (Step S1608).

In a case where the error detection code length determining part 104 determines that padding is necessary (Yes in Step S1608), the transmitting part 108 fills a created space with the error detection code in accordance with the number of bits of the space (Step S1610).

On the other hand, in a case where the error detection code length determining part 104 determines that padding is unnecessary (No in Step S1608), the transmitting part 108 adds the error detection code to the transport block (Step S1612).

Then, the data are output (Step S1614).

In the wireless communication system according the third embodiment of the present invention, in addition to variably controlling the length of the error detection code, repetition of the error detection code is conducted without performing padding in a case where the amount of user data to be transmitted is insufficient with respect to the size of the transport block. As an alternative embodiment of the present invention, the length of the error detection code may be variably controlled and the error detection code may be repeated in a case where the amount of user data to be transmitted is insufficient with respect to the size of the transport block whereas the error detection code to be added to the transport block is thinned in a case where repetition of the error detection code is not conducted. By doing so, error detection performance can be improved in a case where repetition is performed and data transfer efficiency can be improved in a case where the error detection code is thinned.

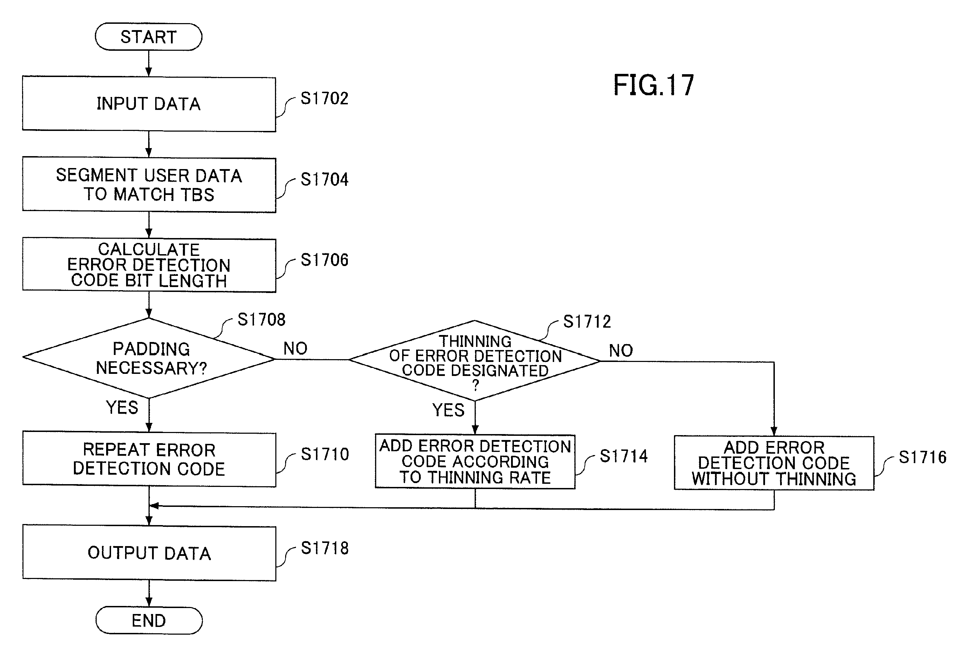

Next, an operation of the transmission apparatus 100 according to the alternative embodiment of the present invention is described with reference to Fig.17.

The processes performed until the error detection code is calculated are substantially the same as those described in Steps S702 through S706 of Fig.7.

The user data to be transmitted are input to the transmission apparatus 100 (Step S1702).

The transmitting part 108 segments the user data to match the size of the transport block (Step S1704).

Then, the error detection code length determining part 104 calculates the error detection code bit length (Step S1706).

Then, the error detection code length determining part 104 determines whether the user data are sufficient with respect to the size of the transport block. That is, the error detection code length determining part 104 determines whether padding is necessary (Step S1708).

In a case where the error detection code length determining part 104 determines that padding is necessary (Yes in Step S1708), the transmitting part 108 fills a created space with the error detection code in accordance with the number of bits of the space (Step S1710).

On the other hand, in a case where the error detection code length determining part 104 determines that padding is unnecessary (No in Step S1608), the error detection code length determining part 104 determines whether the error detection code addition interval is designated. In other words, the error detection code length determining part 104 determines whether thinning of the error detection code is designated (Step S1712). For example, the error detection code length calculating part 104 calculates the error detection code length and the error detection code addition interval based on the reception quality data, service type data, and system parameters.

In a case where the error detection code length determining part 104 determines that the error detection code addition interval is designated (Yes in Step S1712), the transmitting part 108 adds the error detection code to the transport block in accordance with the error detection code addition interval (thinning rate) (Step S1714).

On the other hand, in a case where the error detection code length determining part 104 determines that the error detection code addition interval is not designated (No in Step S1712), the transmitting part 108 adds the error detection code to every transport block (Step S1716).

Then, the data are output (Step S1718).

Next, the reception apparatus 200 according to the third embodiment of the present invention is described.

The error detection code determining part 206 conducts determination of the error detection code. For example, the error detection code determining part 206 obtains data length data by referring to the header and recognizes the error detection code in the portion of the transport block other than where data are added. The error detection code determining part 206 performs error detection on the received data based on the error detection code in the portion of the transport block other than where data are added with respect to the error detection code length and the transport block size input from the control data receiving part 204. The subsequent processes are the same as those of the above-described embodiments of the present invention.

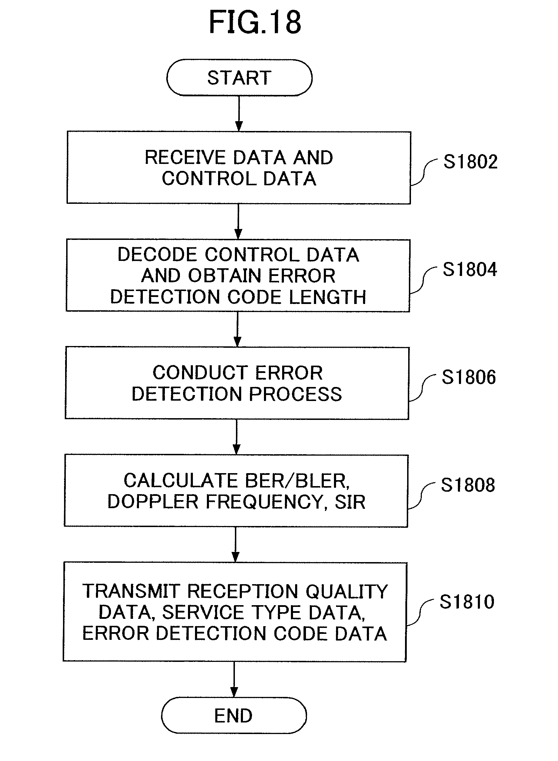

Next, an operation of the reception apparatus 200 according to the third embodiment of the present invention is described with reference to Fig.18.

The receiving part 202 receives data and control data from the transmission apparatus 100 (Step S1802).

Then, the control data receiving part 204 decodes the control data and obtains error detection code length (Step S1804).

Then, the error detection code determining part 206 conducts an error detection process based on the error detection code length (Step S1806). For example, the error detection code determining part 206 obtains data length data by referring to the header and recognizes the error detection code in the portion of the transport block other than where data are added. The error detection code determining part 206 performs error detection on the received data based on the error detection code in the portion of the transport block other than where data are added with respect to the error detection code length and the transport block size input from the control data receiving part 204.

Then, the reception quality measuring part 208 measures (calculates) BER and/or BLER, Doppler frequency, and SIR (Step S1808).

Then, the transmitting part 210 transmits reception quality data, service type data, and error detection code data (Step S1810).

In the wireless communication system according the third embodiment of the present invention, in addition to variably controlling the length of the error detection code, repetition of the error detection code is conducted without performing padding in a case where the amount of user data to be transmitted is insufficient with respect to the size of the transport block. As another alternative embodiment of the present invention, the repetition of the error detection code may be conducted without padding in a case of not conducting the variable control of the error detection code length where the amount of user data to be transmitted is insufficient with respect to the size of the transport block. In this other alternative embodiment of the present invention, the bit length of the error detection code is a fixed number of bits determined by the specifications of the system. In other words, the bit length of the error detection code is error detection code before being variably controlled. By doing so, the process of transmitting control data (including error detection code length) from the transmission apparatus 100 to the reception apparatus 200 can be abbreviated.

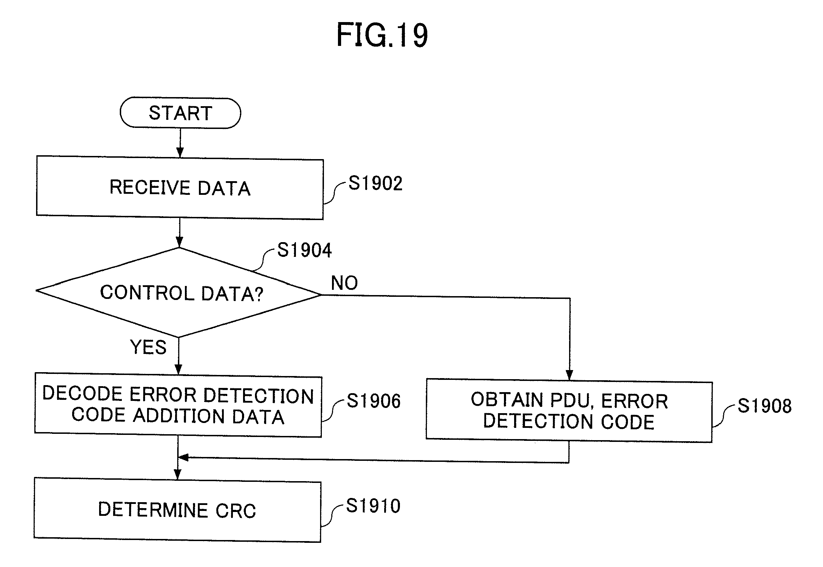

Next, an operation of the reception apparatus 200 according to the other alternative embodiment of the present invention is described with reference to Fig.19.

The receiving part 202 receives data from the transmission apparatus 100 (Step S1902).

Then, the control data receiving part 204 determines whether control data including error detection code length data have been received (Step S1904).

In a case where control data are received (Yes in Step S1904), the control data receiving part 204 decodes the control data and obtains the error detection code length data (Step S1906).

On the other hand, in a case where control data are not received (No in Step S1904), the error detection code determining part 206 obtains the data length included in the header of the protocol data unit and the error detection code length decided beforehand by the system (Step S1908).

Then, the error detection code determining part 206 conducts error detection based on the data length included in the header of the protocol data unit and the error detection code length data or the error detection code length decided beforehand by the system (Step S1910). The subsequent processes are the same as those of the above-described embodiments of the present invention.

Hence, in a case where the status of a transmission path is satisfactory or in a case of assuring (guaranteeing) data in an upper level layer, the above-described embodiments of the present invention can reduce the number of bits of the error detection code corresponding to each transport block or each protocol data unit, so that user data can be assigned (allocated) to the spaces where the bits have been reduced. Thereby, throughput can be improved.

Furthermore, in a case where there is padding, repetition of the error detection code corresponding to each transport block or each protocol data unit can be conducted. Thereby, error detection performance can be improved.

Further, the present invention is not limited to these embodiments, but variations and modifications may be made without departing from the scope of the present invention.

**Claims**

1. A transmission apparatus **characterized by** comprising:

an error detection code length calculating part for determining an error detection code length to be added to transmission data based on communication quality data of a reception apparatus;
a calculating part for obtaining an error detection code having the error detection code length determined by the error detection code length calculating part by conducting calculation based on the transmission data; and a transmitting part for adding the error detection code to the transmission data and transmitting the transmission data with the added error detection code.

2. The transmission apparatus as claimed in claim 1, **characterized in that** the error detection code length calculating part determines the error detection code length based on a service request.

3. The transmission apparatus as claimed in claim 1, **characterized by** further comprising:

a modulation scheme/encoding rate determining part for determining a modulation scheme and an encoding rate to be applied to the reception apparatus;

wherein the error detection code length determining part determines the error detection code length based on the modulation scheme and encoding rate determined by the modulation scheme/encoding rate determining part.

4. The transmission apparatus as claimed in claim 1, **characterized in that** the error detection code length determining part determines the error detection code length by weighting the parameters included in the communication quality data.

5. The transmission apparatus as claimed in claim 1, **characterized in that** the calculating part obtains the error detection code having the error detection code length by conducting the calculation with different generated polynomials in accordance with the error detection code length determined by the error detection code length determining part.

6. The transmission apparatus as claimed in claim 1, **characterized in that** the calculating part obtains the error detection code having the error detection code length by processing the results of the calculation in accordance with the error detection code length determined by the error detection code length determining part.

7. The transmission apparatus as claimed in claim 1, **characterized by** further comprising:

an addition interval determining part for determining an interval for adding the error detection code to consecutive transmission data based on the communication quality data;

wherein the transmitting part adds the error detection code to the transmission data and transmits the transmission data with the added error detection code based on the addition interval determined by the addition interval determining part.

8. The transmission apparatus as claimed in claim 1, **characterized by** further comprising:

a space size determining part;

wherein the transmission data are segmented and each data segment is added to a predetermined block, wherein the space size determining part determines whether the size of a space created by adding one of the data segments to the predetermined block is an integral multiple of the error detection code length, wherein the transmitting part adds the error detection code to the space in a case where the size of the space is an integral multiple of the error detection code length, wherein the transmitting part processes the error detection code in accordance with the size of the space in a case where the size of the space is not an integral multiple of the error detection code length and adds the processed error detection code to the space.

9. The transmission apparatus as claimed in claim 8, **characterized in that** the transmitting part obtains the processed error detection code to be added to the space based on a bit position decided beforehand by the transmission apparatus and the reception apparatus.

10. The transmission apparatus as claimed in claim 1, **characterized by** further comprising:

a notifying part for reporting the error detection code length to the reception apparatus.

**11.** A reception apparatus **characterized by** comprising:

an error detection code determining part for performing error detection on transmission data transmitted from a transmission apparatus;

wherein the transmission apparatus determines the length of an error detection code to be added to the transmission data based on communication quality data of the reception apparatus and reports the determined error detection code length to the reception apparatus.

**12.** The reception apparatus as claimed in claim 11, **characterized in that** the transmission apparatus obtains an interval for adding the error detection code to consecutive transmission data based on the communication quality data and adds the error detection code to the transmission data in accordance with the obtained addition interval, wherein the error detection code determining part performs the error detection on the transmission data based on the addition interval.

**13.** The reception apparatus as claimed in claim 11, **characterized in that** the transmission apparatus segments the transmission data and adds each of the data segments to a predetermined block, wherein the error detection code determining part performs the error detection based on a predetermined error detection code added to a space created by adding one of the data segments to the predetermined block.

**14.** A data transmission method for transmitting data from a transmission apparatus to a reception apparatus, the method **characterized by** comprising the steps of:

receiving communication quality data of the reception apparatus;
determining an error detection code length to be added to transmission data based on the communication quality data;
obtaining an error detection code having the error detection code length by conducting calculation based on the transmission data;
adding the error detection code to the transmission data; and
transmitting the transmission data with the added error detection code.

# FIG.1

USER DATA

FROM WIRELESS
CIRCUIT

| TB/PDU SEGMENTATION | S2 |

| CRC CODE ADDITION | S4 |

| CHANNEL ENCODING (ERROR CORRECTION) | S6 |

| INTERLEAVING | S8 |

| RATE MATCHING | S10 |

| MULTIPLEXING | S12 |

TO MODULATION
CIRCUIT

| TIMING SYNCHRONIZATION/ CHANNEL ESTIMATION &COMPENSATION | S14 |

| DE-INTERLEAVING | S16 |

| RE-TRANSMISSION CONTROL | S18 |

| DECODING | S20 |

| CRC | S22 |

| TB/PDU ASSEMBLY | S24 |

USER DATA

FIG.2

# FIG.3

TRANSMISSION APPARATUS — 100

USER DATA → TRANSMITTING PART — 108

ERROR DETECTION CODE LENGTH DETERMINING PART — 106

TBS, USER DATA LENGTH DATA → ERROR DETECTION CODE LENGTH CALCULATING PART — 104

RECEIVING PART — 102

RECEPTION APPARATUS — 200

RECEIVING PART — 202 → USER DATA

ERROR DETECTION CODE DETERMINING PART — 206

CONTROL DATA RECEIVING PART — 204

RECEPTION QUALITY MEASURING PART — 208

TRANSMITTING PART — 210

USER REQUEST ERROR DETECTION CODE LENGTH

· DATA
· CONTROL DATA

· RECEPTION QUALITY DATA
· SERVICE TYPE
· ERROR DETECTION CODE DATA
· RE-TRANSMISSION DATA(ACK/NACK)

EP 1 931 072 A2

## FIG.4

| RANGE OF NOTIFIED VALUE / PARAMETER | BER/ BLER | DOPPLER FREQUENCY (Hz) | SIR (dB) | MODULATION SCHEME/CODING RATE | QoS | ... |
|---|---|---|---|---|---|---|
| 0~0.1 | A1 | | | | | |
| 0.1~0.01 | A2 | | | | | |
| ... | .. | | | | | |
| 0~25 | | B1 | | | | |
| 26~50 | | B2 | | | | |
| ... | | .. | | | | |
| 0~5 | | | C1 | | | |
| 6~10 | | | C2 | | | |
| ... | | | .. | | | |
| QPSK | | | | D1 | | |
| 16QAM | | | | D2 | | |
| ... | | | | .. | | |
| RT | | | | | E1 | |
| NRT | | | | | E2 | |
| ... | | | | | .. | |
| ... | | | | | | F1 |
| WEIGHTED COEFFICIENT | $\alpha 1$ | $\alpha 2$ | $\alpha 3$ | $\alpha 4$ | $\alpha 5$ | ... |

EP 1 931 072 A2

# FIG.5

| FREQUENCY (RESOURCE) | ERROR DETECTION CODE LENGTH |
|:---:|:---:|
| A | 16 |
| B | 8 |
| C | 4 |
| . . | |

# FIG.6

| EXISTENCE OF ERROR DETECTION CODE | NUMBER OF BITS OF ERROR DETECTION CODE |
|---|---|

EXISTENCE OF ERROR DETECTION CODE  (OPTIONAL)
　"0"NO
　"1"YES

NUMBER OF BITS OF ERROR DETECTION  CODE (REQUISITE)
　"0x00"NUMBER OF BITS OF ERROR DETECTION CODE=0BIT
　"0x01"NUMBER OF BITS OF ERROR DETECTION CODE=1BIT
　"0x10"NUMBER OF BITS OF ERROR DETECTION CODE=2BIT
　　　　·
　　　　·

# FIG.7

START

RECEIVE RECEPTION
QUALITY DATA, ERROR
DETECTION CODE
DATA, SERVICE TYPE DATA — S702

CALCULATE SYSTEM
PARAMETER BASED ON
RECEPTION  QUALITY DATA — S704

CALCULATE ERROR DETECTION
CODE LENGTH BASED ON
RECEPTION QUALITY DATA,
SERVICE TYPE DATA,
SYSTEM PARAMETER — S706

SEGMENT DATA TO MATCH
SIZE OF TRANSPORT BLOCK — S708

CALCULATE ERROR
DETECTION CODE — S710

ADD ERROR DETECTION CODE
TO TRANSPORT BLOCK AND
TRANSMIT THE TRANSPORT BLOCK — S712

END

# FIG.8

# FIG.9

START

RECEIVE DATA AND
CONTROL DATA — S902

DECODE CONTROL DATA
AND OBTAIN ERROR
DETECTION CODE  LENGTH — S904

CONDUCT ERROR
DETECTION PROCESS — S906

CALCULATE BER/BLER,
DOPPLER FREQUENCY, SIR — S908

TRANSMIT RECEPTION
QUALITY DATA, SERVICE
TYPE DATA,  AND ERROR
DETECTION CODE DATA — S910

END

# FIG.10

| FREQUENCY (RESOURCE) | ERROR DETECTION CODE LENGTH | ERROR DETECTION CODE ADDITION INTERVAL |
|---|---|---|
| A | 16 | 1 |
| B | 8 | 1/2 |
| C | 4 | 1/4 |
| . . | | |

# FIG.11

# FIG.12

| EXISTENCE OF ERROR DETECTION CODE | NUMBER OF BITS OF ERROR DETECTION CODE | ERROR DETECTION CODE ADDITION INTERVAL |
|---|---|---|

EXISTENCE OF ERROR DETECTION CODE
"0"NO
"1"YES

NUMBER OF BITS OF ERROR DETECTION CODE
"0x00"NUMBER OF BITS OF ERROR DETECTION CODE=0BIT
"0x01"NUMBER OF BITS OF ERROR DETECTION CODE=1BIT
"0x10"NUMBER OF BITS OF ERROR DETECTION CODE=2BIT
.
.

ERROR DETECTION CODE ADDITION INTERVAL
"0x00"ERROR DETECTION CODE BIT THINNING RATE=1
"0x01"ERROR DETECTION CODE BIT THINNING RATE=1/2
"0x10"ERROR DETECTION CODE BIT THINNING RATE=1/4
.
.

# FIG.13

START

RECEIVE RECEPTION QUALITY DATA, ERROR DETECTION CODE DATA, AND SERVICE TYPE DATA — S1302

CALCULATE SYSTEM PARAMETER BASED ON RECEPTION QUALITY DATA — S1304

CALCULATE ERROR DETECTION CODE LENGTH AND ERROR DETECTION CODE ADDITION INTERVAL BASED ON RECEPTION QUALITY DATA, SERVICE TYPE DATA, AND SYSTEM PARAMETER — S1306

SEGMENT DATA TO MATCH SIZE OF TRANSPORT BLOCK — S1308

CALCULATE ERROR DETECTION CODE — S1310

ADD ERROR DETECTION CODE TO TRANSPORT BLOCK ACCORDING TO ERROR DETECTION CODE ADDITION INTERVAL AND TRANSMIT TRANSPORT BLOCK — S1312

END

# FIG.14

START

RECEIVE DATA AND
CONTROL DATA — S1402

DECODE CONTROL DATA AND
OBTAIN ERROR DETECTION
CODE LENGTH AND ERROR
DETECTION CODE
ADDITION INTERVAL  DATA — S1404

CONDUCT ERROR DETECTION
ACCORDING TO ERROR DETECTION
CODE ADDITION INTERVAL — S1406

CALCULATE BER/BLER,
DOPPLER FREQUENCY, AND SIR — S1408

TRANSMIT RECEPTION
QUALITY DATA, SERVICE
TYPE DATA, AND ERROR
DETECTION CODE DATA — S1410

END

FIG.15

EP 1 931 072 A2

# FIG.16

START

INPUT DATA — S1602

SEGMENT USER DATA
TO MATCH TBS — S1604

CALCULATE
ERROR DETECTION
CODE BIT LENGTH — S1606

PADDING
NECESSARY? — S1608

NO

YES

REPEAT ERROR
DETECTION CODE — S1610

ADD ERROR
DETECTION CODE — S1612

OUTPUT DATA — S1614

END

EP 1 931 072 A2

FIG.17

```
                    ┌─────────────┐
                    │    START    │
                    └──────┬──────┘
                           ▼
              ┌────────────────────────┐
              │      INPUT DATA        │  S1702
              └────────────┬───────────┘
                           ▼
              ┌────────────────────────┐
              │   SEGMENT USER DATA     │  S1704
              │    TO MATCH TBS         │
              └────────────┬───────────┘
                           ▼
              ┌────────────────────────┐
              │     CALCULATE          │
              │  ERROR DETECTION       │  S1706
              │   CODE BIT LENGTH      │
              └────────────┬───────────┘
```

S1708

PADDING NECESSARY?    NO

S1712

THINNING OF ERROR DETECTION CODE DESIGNATED?    NO

YES

YES

REPEAT ERROR DETECTION CODE    S1710

ADD ERROR DETECTION CODE ACCORDING TO THINNING RATE    S1714

ADD ERROR DETECTION CODE WITHOUT THINNING    S1716

OUTPUT DATA    S1718

END

# FIG.18

```
        START
          │
          ▼
┌─────────────────────┐
│  RECEIVE DATA AND   │ ⟋ S1802
│    CONTROL DATA     │
└─────────────────────┘
          │
          ▼
┌─────────────────────┐
│  DECODE CONTROL DATA│
│   AND OBTAIN ERROR  │ ⟋ S1804
│ DETECTION CODE LENGTH│
└─────────────────────┘
          │
          ▼
┌─────────────────────┐
│   CONDUCT ERROR     │ ⟋ S1806
│  DETECTION PROCESS  │
└─────────────────────┘
          │
          ▼
┌─────────────────────┐
│  CALCULATE BER/BLER,│ ⟋ S1808
│ DOPPLER FREQUENCY, SIR│
└─────────────────────┘
          │
          ▼
┌──────────────────────┐
│TRANSMIT RECEPTION QUALITY│
│  DATA, SERVICE TYPE DATA,│ ⟋ S1810
│ ERROR DETECTION CODE DATA│
└──────────────────────┘
          │
          ▼
         END
```

# FIG.19

```
                    ┌──────────┐
                    │  START   │
                    └────┬─────┘
                         │
                         ▼
              ┌─────────────────────┐
              │    RECEIVE DATA     │──S1902
              └──────────┬──────────┘
                         │
                         ▼
                    ╱─────────╲   ┌─S1904
                   ╱  CONTROL  ╲    NO
                   ╲   DATA?   ╱ ──────────────────┐
                    ╲─────────╱                    │
                      YES │                        │
                          ▼                        ▼
        ┌─────────────────────┐     ┌─────────────────────┐
        │ DECODE ERROR DETECTION│──S1906  │  OBTAIN PDU, ERROR  │──S1908
        │ CODE ADDITION DATA  │     │  DETECTION CODE     │
        └──────────┬──────────┘     └──────────┬──────────┘
                   │◄──────────────────────────┘
                   ▼
        ┌─────────────────────┐
        │   DETERMINE CRC     │──S1910
        └─────────────────────┘
```

EP 1 931 072 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005303495 A

- JP 2087735 A